# EUROPÄISCHE PATENTSCHRIFT

(11) **EP 3 491 787 B1**
(45) Veröffentlichungstag und Bekanntmachung des Hinweises auf die Patenterteilung: **01.04.2020**
(21) Anmeldenummer: 17737509.4
(22) Anmeldetag: 28.06.2017
(51) Int. Cl.: H04L 12/40

(54) **REIHENMODUL, FUNKTIONSMODULANORDNUNG UND MODULAR AUSGEBILDETE STEUERUNGSANORDNUNG**
SERIES MODULE, FUNCTIONAL MODULE ARRANGEMENT AND MODULAR CONTROL ARRANGEMENT
MODULE SÉRIE, SYSTÈME MODULAIRE FONCTIONNEL ET SYSTÈME DE COMMANDE DE CONCEPTION MODULAIRE

(30) Priorität: 26.07.2016 DE 102016213724
(43) Veröffentlichungstag der Anmeldung: 05.06.2019
(73) Patentinhaber: Festo SE & Co. KG, 73734 Esslingen (DE)
(72) Erfinder: FORCHT, Ralf, 73240 Wendlingen (DE); WALKER, Julian, 71254 Ditzingen (DE); SCHLOTZ, Dieter, 73262 Reichenbach (DE); LAINECKER, Vitali, 72622 Nürtingen (DE); ULRICH, Matthias, 73733 Esslingen (DE); KRINN, Jochen, 73733 Esslingen (DE)
(74) Vertreter: Patentanwälte Magenbauer & Kollegen Partnerschaft mbB
(86) Internationale Anmeldenummer: PCT/EP2017/066040
(87) Internationale Veröffentlichungsnummer: WO 2018/019509

(56) Entgegenhaltungen:
- DE-A1- 10 148 348
- DE-A1-102011 105 971
- DE-A1-102013 221 577
- US-A1- 2015 169 493

## Beschreibung

Die Erfindung betrifft ein Reihenmodul für eine modular ausgebildete Steuerungsanordnung. Ferner betrifft die Erfindung eine Funktionsmodulanordnung sowie eine modular ausgebildete Steuerungsanordnung.

Aus der DE 10 2011 105971 A1 ist eine Bordnetzanordnung für ein Kraftfahrzeug mit einem ersten Bordnetz zum Bereitstellen einer ersten elektrischen Spannung und einem zweiten Bordnetz zum Bereitstellen einer zweiten elektrischen Spannung bekannt, wobei die zweite elektrische Spannung im Vergleich zu der ersten elektrischen Spannung einen höheren Wert aufweist, wobei eine Begrenzungseinrichtung mit einem Lastzweig, der mit dem zweiten Bordnetz koppelbar ist und über den zum Begrenzen des Werts der zweiten elektrischen Spannung ein Spannungsabfall erzeugbar ist, wobei der Lastzweig einen Spannungsabgriff aufweist, der mit dem ersten Bordnetz verbindbar ist und an dem über den Spannungsabfall an dem zweiten Bordnetz eine elektrische Spannung mit dem Wert der ersten elektrischen Spannung zur Versorgung des ersten Bordnetzes bereitstellbar ist.

Die Aufgabe der Erfindung besteht darin, ein Reihenmodul, eine Funktionsmodulanordnung sowie eine modular ausgebildete Steuerungsanordnung bereitzustellen, bei denen mit einfachen Mitteln ein sicherheitsgerichteter Betrieb ermöglicht wird.

Diese Aufgabe wird für ein Reihenmodul der eingangs genannten Art mit den Merkmalen des Anspruchs 1 gelöst. Hierbei ist vorgesehen, dass an einem Modulgehäuse eine erste Reihenschnittstelle und eine erste Busschnittstelle sowie eine zweite Reihenschnittstelle und eine zweite Busschnittstelle ausgebildet sind, wobei zwischen den beiden Busschnittstellen eine Buskommunikationsleitung und zwischen den beiden Reihenschnittstellen wenigstens drei Versorgungsleitungen ausgebildet sind und wobei zwei der Versorgungsleitungen jeweils ein Anschlusskontakt zugeordnet ist, um eine Verbraucherschnittstelle zu bilden, die zum Anschluss eines elektrischen Verbrauchers ausgebildet ist. Ferner ist vorgesehen, dass der dritten Versorgungsleitung und/oder der Buskommunikationsleitung jeweils ein mit der Verbraucherschnittstelle gekoppelter Anschlusskontakt zugeordnet ist. Durch diese Maßnahme kann an der Verbrauchserschnittstelle neben einer Versorgungsspannung, die von zwei der Versorgungsleitungen bereitgestellt wird, zusätzlich eine Steuerspannung oder ein Steuersignal bereitgestellt werden, um in sicherheitsgerichteter Weise Einfluss auf einen elektrischen Verbraucher nehmen zu können, der an der Verbraucherschnittstelle angeschlossen ist. Hierzu wird an der Verbraucherschnittstelle ein elektrisches Potential der dritten Versorgungsleitung und/oder ein Buskommunikationssignal der Buskommunikationsleitung bereitgestellt, so dass ein entsprechend ausgebildeter Verbraucher, bei dem eine UND-Verknüpfung der Versorgungsspannung mit einer Steuerspannung, die übe die dritte Versorgungsleitung übertragen wird, und/oder einem Steuersignal, das über die Buskommunikationsleitung übertragen wird, vorgenommen wird. Hierdurch kann der elektrische Verbraucher in sicherheitsgerichteter Weise betrieben und/oder abgeschaltet werden. Exemplarisch ist vorgesehen, dass eine der drei Versorgungsleitungen bei einer Verwendung des Reihenmoduls in einer modular ausgebildeten Steuerungsanordnung auf einem Massepotential liegt und an den beiden anderen Versorgungsleitungen unterschiedliche elektrische Potentiale anlegen, wobei eines dieser Potentiale gegenüber dem Massepotential als Versorgungsspannung genutzt wird und das andere Potential gegenüber dem Massepotential als Signalspannung dient, um einen Zustand der modular ausgebildeten Steuerungsanordnung zu erfassen und hieraus Rückschlüsse über ein Schaltverhalten für den zugeordneten elektrischen Verbraucher ziehen zu können. Beispielhaft kann vorgesehen sein, mehrere Reihenmodule in einer modular ausgebildeten Steuerungsanordnung aneinandergereiht zu betreiben, wobei über die wenigstens drei Verbindungsleitungen wenigstens zwei unterschiedliche Versorgungsspannungen an unterschiedliche Gruppen von Reihenmodulen bereitgestellt werden und ein elektrischer Verbraucher eines der Reihenmodule beispielsweise dann nicht abgeschaltet werden kann, wenn eine Abschaltung der anderen Gruppe von Reihenmodulen durch entsprechende Spannungsbeaufschlagung der zugehörigen Versorgungsleitung oder Versorgungsleitungen vorgenommen wird.

Beispielhaft kann das Reihenmodul, das im Falle einer Abschaltung der anderen Gruppe von Reihenmodulen nicht zu einer Abschaltung des eigenen Verbrauchers führen darf, für eine Hebevorrichtung für ein Werkstück eingesetzt werden, wobei diese Hebevorrichtung speziell in dem Fall einer Abschaltung der anderen Gruppe von Reihenmodulen ihren Betriebszustand beibehalten muss, um keine Gefährdung eines Bedieners herbeizuführen.

Vorteilhafte Weiterbildungen der Erfindung sind Gegenstand der Unteransprüche.

Zweckmäßig ist es, wenn wenigstens eine Versorgungsleitung zwischen den beiden Reihenschnittstellen Z-verkettet angeordnet ist. Durch diese Maßnahme können eine Vielzahl von Reihenmodulen in unterschiedliche elektrische Gruppen eingeteilt werden, ohne dass hierfür eine Vielzahl von unterschiedlich ausgestalteten Reihenmodulen erforderlich ist. Vielmehr wird durch die Z-Verkettung der wenigstens einen Versorgungsleitung eine Austauschbarkeit der Reihenmodule untereinander gewährleistet, wobei gleichzeitig durch geeignete Anordnung der Reihenmodule die unterschiedlich ansteuerbaren Gruppen gebildet werden können.

Bevorzugt ist vorgesehen, dass die Versorgungsleitungen jeweils als Versorgungsleitungspaare angeordnet sind, die jeweils eine erste Versorgungsleitung und eine zweite Versorgungsleitung umfassen und dass mindestens zwei der Versorgungsleitungspaare mit der Verbraucherschnittstelle gekoppelt sind. Durch diese Maßnahme kann bei Anreihung des Reihenmoduls an ein entsprechend ausgebildetes Eingangsmodul eine zweikanalige Abschaltung des jeweils an der Verbraucherschnittstelle angebrachten Verbrauchers erzielt werden, da beispielsweise vorgesehen sein kann, beide Versorgungsleitungen eines Versorgungsleitungspaars im Eingangsmodul im Falle einer sicherheitsgerichteten Betätigung des Eingangsmoduls und der daran angeordneten Reihenmodule parallel abzuschalten, um eine sichere Außerbetriebnahme eines an das jeweilige Reihenmodul angebrachten elektrischen Verbrauchers zu gewährleisten.

Die Aufgabe der Erfindung wird für eine Funktionsmodulanordnung mit einem Reihenmodul nach einem der Ansprüche 1 bis 3 und mit einem elektrischen Verbraucher, der eine Anschlussschnittstelle mit wenigstens drei Anschlusskontakten umfasst, die zur Kopplung mit der Verbraucherschnittstelle des Reihenmoduls ausgebildet ist, gelöst, wobei der Verbraucher eine Lastschaltung umfasst, die mit einer ersten Paarung von Anschlusskontakten der Verbraucherschnittstelle verbunden ist und wobei der Verbraucher eine Steuerschaltung umfasst, die mit einer zweiten Paarung von Anschlusskontakten der Verbraucherschnittstelle verbunden ist und die für eine Beeinflussung wenigstens einer elektrischen Verbindung zwischen der ersten Paarung von Anschlusskontakten der Verbraucherschnittstelle und der Lastschaltung in Abhängigkeit von Signalpegeln an der zweiten Paarung von Anschlusskontakten ausgebildet ist. Dementsprechend wird die Funktionsmodulanordnung durch Kombination eines Reihenmoduls mit einem elektrischen Verbraucher gebildet, wobei der Verbraucher mit einer Anschlussschnittstelle an der Verbraucherschnittstelle des Reihenmoduls angekoppelt ist. Der Verbraucher umfasst einerseits eine Lastschaltung, beispielsweise einen elektromagnetischen Antrieb zur Ansteuerung eines Fluidventils, wobei diese Lastschaltung mit einer ersten Paarung von Anschlusskontakten, beispielsweise mit den Anschlusskontakten einer Masseleitung und einer ersten Versorgungsleitung, verbunden ist. Ferner umfasst der Verbraucher eine Steuerschaltung, die mit einer zweiten Paarung von Anschlusskontakten, beispielsweise der Masseleitung und einer zweiten Versorgungsleitung der Verbraucherschnittstelle verbunden ist, wobei die Steuerschaltung dazu vorgesehen ist, eine elektrische Verbindung zwischen der ersten Paarung von Anschlusskontakten der Anschlussschnittstelle und der Lastschaltung vorzunehmen. Der Einfluss der Steuerschaltung auf die erste Paarung von Anschlusskontakten hängt von wenigstens einem Signalpegel der zweiten Paarung von Anschlusskontakten ab, beispielhaft kann die Steuerschaltung derart ausgebildet sein, dass sie nur dann eine Änderung eines Schaltzustands der Lastschaltung ermöglicht, wenn ein vorgebbarer Signalpegel an der zweiten Paarung von Versorgungsleitungen anliegt.

Bei einer vorteilhaften Weiterbildung der Erfindung ist vorgesehen, dass die Steuerschaltung als Sperrschaltung ausgebildet ist, die für eine Sperrung eines Zustands der Lastschaltung in Abhängigkeit von Signalpegeln an der zweiten Paarung von Versorgungsleitungen ausgebildet ist.

In weiterer Ausgestaltung der Erfindung ist vorgesehen, dass die Steuerschaltung einen Buskommunikationsbaustein umfasst, der mit der Buskommunikationsleitung gekoppelt ist und der für eine Umsetzung von Buskommunikationssignalen in Laststeuersignale zur Ansteuerung der Lastschaltung ausgebildet ist, und dass die Steuerschaltung für eine Freigabe der Laststeuersignale in Abhängigkeit von Signalpegeln an der zweiten Paarung von Anschlusskontakten ausgebildet ist. In diesem Fall erfolgt die Ansteuerung der Lastschaltung über ein Buskommunikationssignal, das über die Buskommunikationsleitung bereitgestellt wird und das vom Buskommunikationsbaustein in ein entsprechendes Laststeuersignal umgewandelt wird. Dabei ist vorgesehen, dass die Steuerschaltung eine Änderung eines Schaltzustands der Lastschaltung nur dann durch einen entsprechenden Signalpegel an den Buskommunikationsbaustein freigibt, sofern an der zweiten Paarung von Versorgungsleitungen ein entsprechender Signalpegel vorliegt. Beispielhaft ist davon auszugehen, dass die erste Paarung von Versorgungsleitungen lediglich der elektrischen Versorgung des Buskommunikationsbausteins sowie der Lastschaltung dient, während ein Signalpegel der zweiten Paarung von Versorgungsleitungen für den Buskommunikationsbaustein und die zugeordnete Lastschaltung in der Art eines Zustandssignals gewertet wird, das Auskunft über eine Betriebsweise von nachgelagert angeordneten Reihenmodulen gibt, die einer anderen Gruppe von Reihenmodulen zugeordnet sind und über die zweite Paarung von Versorgungsleitungen mit elektrischer Energie versorgt werden. Dieses Zustandssignal wird in der Steuerschaltung ausgewertet und in geeigneter Weise an den Buskommunikationsbaustein weitergegeben, damit dieser in Abhängigkeit von dem Zustandssignal ein entsprechendes Laststeuersignal an die Lastschaltung bereitstellt oder aufrechterhält oder abschaltet. Die Art der Reaktion auf das Zustandssignal ist von dem der Lastschaltung zugeordneten Verbraucher abhängig und kann im Buskommunikationsbaustein fest vorgegeben oder frei einstellbar sein.

Vorteilhaft ist es, wenn die Steuerschaltung eine, insbesondere eine mittels eines Optokopplers mit dem Buskommunikationsbaustein gekoppelte, Spannungsmesseinrichtung umfasst. Die Aufgabe der Spannungsmesseinrichtung besteht darin, ein Zustandssignal in Abhängigkeit von einer Spannungsversorgung eines nachgelagert angeordneten Reihenmoduls bereitzustellen, um gegebenenfalls eine Sperrung eines Schaltzustands der mit der Steuerschaltung gekoppelten Last zu gewährleisten. Vorzugsweise ist vorgesehen, dass zwischen der Spannungsmesseinrichtung und dem Buskommunikationsbaustein einen Optokoppler ausgebildet ist. Hierdurch wird eine galvanische Trennung zwischen dem Buskommunikationsbaustein und der zugeordneten ersten Paarung von Versorgungsleitungen sowie der Buskommunikationsleitung und der zweiten Paarung von Versorgungsleitungen gewährleistet, um eine zuverlässige elektrische Entkopplung zwischen diesen Komponenten zu gewährleisten. Beispielhaft ist vorgesehen, dass der zweiten Paarung von Versorgungsleitungen ein Sendemittel zur Aussendung von elektromagnetischen Wellen, insbesondere im sichtbaren Lichtbereich, zugeordnet ist, während dem Buskommunikationsbaustein eine Empfangseinrichtung für diese elektromagnetischen Wellen zugeordnet ist, so dass in Abhängigkeit von einem Signalverhalten an der zweiten Paarung von Versorgungsleitungen ein Einfluss auf das Verhalten des Buskommunikationsbausteins genommen werden kann.

Die Aufgabe der Erfindung wird für eine modular ausgebildete Steuerungsanordnung zur Ansteuerung mehrerer elektrischer Verbraucher mit den Merkmalen den Anspruchs 8 gelöst. Hierbei umfasst die modular ausgebildete Steuerungsanordnung ein Eingangsmodul, das eine Buskommunikationsschnittstelle zur Verbindung mit einer übergeordneten Steuerung und eine Versorgungsschnittstelle zur Verbindung mit einer elektrischen Quelle sowie eine Kombinationsschnittstelle mit einer Busschnittstelle und einer Reihenschnittstelle umfasst, wobei zwischen der Buskommunikationsschnittstelle und der Busschnittstelle eine Buskommunikationsleitung ausgebildet ist und wobei zwischen der Versorgungsschnittstelle und der Reihenschnittstelle wenigstens zwei Versorgungsleitungen ausgebildet sind, wobei das Eingangsmodul mit wenigstens einer Funktionsmodulanordnung nach einem der Ansprüche 4 bis 8 verbunden ist, deren Lastschaltung als elektrischer Verbraucher aus der Gruppe: Schaltventil, Proportionalventil, elektromechanischer Aktor, ausgebildet ist. Dabei besteht die Aufgabe des Eingangsmoduls darin, Buskommunikationssignale einer übergeordneten Steuerung, insbesondere einer speicherprogrammierbaren Steuerung (SPS) an eine Anzahl von Funktionsmodulanordnungen weiterzuleiten, die insbesondere über ein proprietäres Buskommunikationssystem angesprochen werden können. Ferner kommt dem Eingangsmodul die Aufgabe zu, eine elektrisehe Versorgung der daran angereihten Funktionsmodulanordnungen zu gewährleisten. Hierbei ist zumindest bei einer sicherheitsgerichteten Ausgestaltung des Eingangsmoduls vorgesehen, dass das Eingangsmodul mehrere Versorgungsleitungspaare an die Funktionsmodulanordnungen bereitstellt, wobei die Versorgungsleitungspaare im Eingangsmodul getrennt voneinander abschaltbar sind, um hierüber Gruppen von Funktionsmodulanordnungen zu bilden, die durch entsprechende Bereitstellung oder Abschaltung von Versorgungsenergie über die zugeordneten Versorgungsleitungspaare in ihrer Betriebsweise beeinflusst werden können. Die an das Eingangsmodul angeschlossenen Funktionsmodulanordnungen umfassen Verbraucher wie Schaltventile, Proportionalventile oder elektromechanische Aktoren, die ihrerseits für eine Einflussnahme auf eine komplexe Anlage, beispielsweise eine Handhabungs- oder Produktionsmaschine eingesetzt werden können.

Bei einer Weiterbildung der modular ausgebildeten Steuerungsanordnung ist vorgesehen, dass im Eingangsmodul wenigstens eine, insbesondere jeder, Versorgungsleitung wenigstens eine Schalteinrichtung zur Unterbrechung der elektrischen Verbindung zwischen der Versorgungsschnittstelle und der Reihenschnittstelle zugeordnet ist. Hierüber wird in Abhängigkeit von einem Signal einer externen Sicherheitssteuerung oder einem Ergebnis einer internen Signalverarbeitung in der modular ausgebildeten Steuerungsanordnung eine sicherheitsgerichtete Ansteuerung von unterschiedlichen Gruppen von Funktionsmodulanordnungen ermöglicht, die jeweils darüber definiert sind, dass einer Gruppe zugehörige Funktionsmodulanordnungen an den gleichen Paaren von Versorgungsleitungen angeschlossen sind.

Eine vorteilhafte Ausführungsform der Erfindung ist in der Zeichnung dargestellt. Hierbei zeigt:

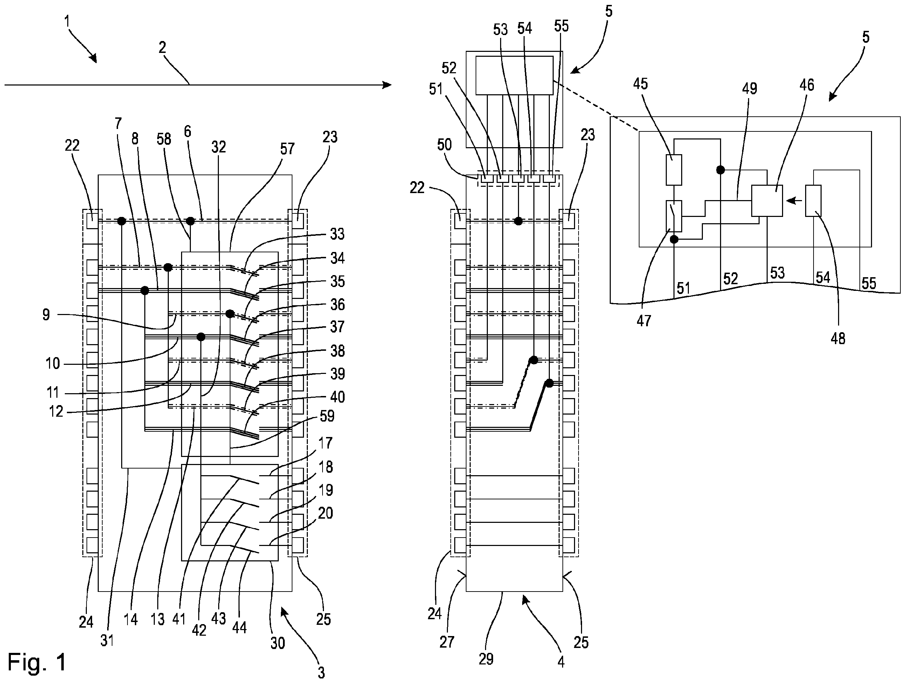

- Figur 1: eine schematische Darstellung einer Steuerungsan-ordnung, die eine Funktionsmodulanordnung sowie ein Eingangsmodul umfasst.

Eine in der Figur 1 dargestellte Steuerungsanordnung 1, die Bestandteil eines nicht näher dargestellten Automatisierungssystems sein kann, das beispielsweise zum Betrieb einer komplexen technischen Anlage unter Verwendung einer Vielzahl von elektrisch oder pneumatisch betreibbaren Aktoren vorgesehen ist, umfasst mehrere längs einer Aufreihungsachse 2 aufgereihte Module. Bei den Modulen handelt es sich um ein Eingangsmodul 3 sowie rein exemplarisch um eine Funktionsmodulanordnung, die ein Reihenmodul 4 und einen dem Reihenmodul 4 zugeordneten elektrischen Verbraucher 5 umfasst. Beispielhaft ist der elektrische Verbraucher 5 als Proportionalventil ausgebildet, wobei aus Gründen der Übersichtlichkeit auf eine Darstellung von Fluidleitungen, die mit Proportionalventil verbunden sind, verzichtet wird.

Rein exemplarisch umfassen das Eingangsmodul 3 sowie das Reihenmodul 4 jeweils nur elektrische Leitungen, die nachstehend näher beschreiben werden. Es kann jedoch auch zudem vorgesehen sein, dass das Eingangsmodul sowie das oder die Reihenmodule bei einer nicht näher dargestellten Variante auch fluidische Leitungen, insbesondere eine Versorgungsleitung und eine Abluftleitung umfassen.

Die in dem Eingangsmodul 3 sowie im Reihenmodul 4 vorgesehen elektrischen Leitungen können in drei unterschiedlichen Gruppen eingeteilt werden. Die erste Leitungsgruppe wird durch die Buskommunikationsleitung 6 gebildet, die sich durch das Eingangsmodul 3 sowie durch das Reihenmodul 4 parallel zur Aufreihungsachse 2 erstreckt und das Eingangsmodul 3 sowie das Reihenmodul 4 sowie möglicherweise weitere, nicht dargestellte Reihenmodule in ununterbrochener Weise miteinander verbindet. Ferner umfassen das Eingangsmodul 3 sowie das Reihenmodul 4 jeweils mehrere Verbindungsleitungen, die entweder einer zweiten Gruppe von Leitungen, nämlich den Versorgungsleitungen, oder einer dritten Gruppe von Leitungen, nämlich den Signalleitungen zugehörig sind.

Beispielhaft ist vorgesehen, dass die Versorgungsleitungen jeweils paarweise angeordnet sind, insbesondere eine potenzialführende Leitung und eine Masseleitung umfassen. Zur Verdeutlichung des Verlaufs der Versorgungsleitungen werden nachstehend für das Eingangsmodul 3 sowie für das Reihenmodul 4 jeweils die gleichen Bezugszeichen für diejenigen Versorgungsleitungen benutzt, die in elektrischer Weise miteinander verknüpft sind. Hierdurch ergibt sich anhand des Verlaufs der Versorgungsleitungen durch das Eingangsmodul 3 sowie das Reihenmodul 4, dass rein exemplarisch Versorgungsleitungen 7, 8, 9, 10, 11, 12, 13, 14 vorgesehen sind.

Ferner gilt im Hinblick auf die der dritten Gruppe von Leitungen zugehörigen Signalleitungen, dass im Eingangsmodul 3 beginnende und das Reihenmodul 4 durchsetzende Signalleitungen 17, 18, 19, 20 vorgesehen sind.

Das Eingangsmodul 3 umfasst eine erste Busschnittstelle 22, eine zweite Busschnittstelle 23, eine erste Reihenschnittstelle 24 sowie eine zweite Reihenschnittstelle 25. Die erste Busschnittstelle 22 kann auch als Buskommunikationsschnittstelle bezeichnet werden, da sie zur Verbindung mit einer nicht dargestellten übergeordneten Steuerung ausgebildet ist. Die erste Reihenschnittstelle 24 kann auch als Versorgungsschnittstelle bezeichnet werden, da sie zur Verbindung mit einer nicht dargestellten elektrischen Quelle ausgebildet ist.

Die zweite Busschnittstelle 23 und die zweite Reihenschnittstelle 25 können auch als Kombinationsschnittstelle bezeichnet werden. Die Busschnittstellen 22, 23 sowie die Reihenschnittstellen 24, 25 sind beim Eingangsmodul 3 sowie beim Reihenmodul 4 an einander entgegengesetzten Stirnflächen 27, 28 eines Modulgehäuses 29 angebracht.

Beim Eingangsmodul 3 dient die erste Busschnittstelle 22 zur Verbindung mit einem vorgelagerten Busteilnehmer, bei dem es sich wahlweise um einen Busknoten oder um eine übergeordnete Steuerung, insbesondere eine speicherprogrammierbare Steuerung (SPS) handeln kann. In jedem Fall wird von der übergeordneten Steuerung oder dem Busknoten ein Buskommunikationssignal an der ersten Busschnittstelle 22 bereitgestellt, das längs der Aufreihungsachse 2 durch das nachgelagert angeordnete Reihenmodul 4 sowie ggf. weitere, nicht dargestellte Reihenmodule weitergeleitet wird.

Hierbei kann vorgesehen sein, dass das Eingangsmodul 3 und das Reihenmodul 4 in individueller Weise auf das über die Buskommunikationsleitung 6 übertragene Buskommunikationssignal zugreifen und diesbezügliche Lese- und/oder Schreibvorgänge vornehmen, um beispielsweise Parameter oder Befehle für den eigenen Betrieb aus dem Buskommunikationssignal zu entnehmen oder Informationen für weitere Busteilnehmer, insbesondere übergeordnete Steuerungseinrichtung, an das Buskommunikationssignal weiterzugeben.

Die ersten und zweiten Busschnittstellen 36, 37 des Reihenmoduls 4 sowie ggf. weiterer, nicht dargestellter Reihenmodule, sind exemplarisch gleich ausgebildet, sodass keine unterschiedlichen Verbindungsmittel, beispielsweise unterschiedliche Steckverbinder, eingesetzt werden müssen.

Die am Reihenmodul 4 vorgesehenen Reihenschnittstellen 24 und 25 sind ebenfalls in elektromechanischer Hinsicht jeweils kompatibel zueinander ausgebildet, wobei sich die Belegung von Anschlusskontakten an den einzelnen Reihenschnittstellen von nachgelagerten, nicht dargestellten Reihenmodulen von den Reihenschnittstellen 24, 25 des Reihenmoduls 4 unterscheiden können.

Beim Eingangsmodul 3 ist exemplarisch vorgesehen, dass die erste Reihenschnittstelle 24 rein exemplarisch nur zwei mit zugehörigen Versorgungsleitungen 7, 8 verbundene, nicht näher dargestellte, Anschlusskontakte aufweist, womit eine Einspeisung von elektrischer Energie in das Eingangsmodul 3 vorgenommen werden kann. Die übrigen, nicht näher dargestellten Steckplätze in der Reihenschnittstelle 22 des Eingangsmoduls 3 sind hingegen nicht verbunden oder belegt.

Hingegen sind bei der zweiten Reihenschnittstelle 23 des Eingangsmoduls 3, die dem nachfolgenden Reihenmodul 4 zugewandt ist, sämtliche nicht näher dargestellte Anschlusskontakte mit zugeordneten Versorgungsleitungen 7 bis 14 sowie Signalleitungen 17 bis 20 verbunden. Somit können die dort anliegenden elektrischen Potenziale oder Signale an das nachgelagert längs der Aufreihungsachse 2 angeordnete Reihenmodul 4 sowie ggf. weitere Reihenmodul weitergeleitet werden. Beispielhaft ist beim Eingangsmodul 3 vorgesehen, dass die Versorgungsleitung 7 mit den Versorgungsleitungen 9, 11 und 13 verbunden ist. Ferner ist die Versorgungsleitung 8 mit den weiteren Versorgungsleitungen 10, 12 und 14 verbunden. Damit können die jeweils an den Versorgungsleitungen 7 und 8 bereitgestellten elektrischen Potenziale an die jeweils zugeordneten Versorgungsleitungen 9, 10, 11, 12, 13, 14 bereitgestellt werden.

Ferner ist im Eingangsmodul 3 ein Buskommunikationsbaustein 30 vorgesehen, bei dem es sich insbesondere um einen Mikroprozessor oder Mikrocontroller handelt. Der Buskommunikationsbaustein 30 ist über eine Kommunikationsleitung 31 mit der Buskommunikationsleitung 6 verbunden und ist ferner über eine Koppelleitung 32 rein exemplarisch mit der Versorgungsleitung 10 verbunden. Im Buskommunikationsbaustein 30 sind mehrere Schalter 33 bis 44 ausgebildet. Diese Schalter 33 bis 44 können jeweils in individueller Weise gemäß einem im Buskommunikationsbaustein 30 gespeicherten Programm in Abhängigkeit von einem über die Kommunikationsleitung 31 bereitgestellten Buskommunikationssignal in ihrem Schaltzustand verändert werden. Dadurch können wahlweise und individuell elektrische Verbindungen zwischen den Versorgungsleitungen 7 bis 14 und den nicht näher dargestellten, den jeweiligen Versorgungsleitungen 7 bis 14 zugeordneten Anschlusskontakten der zweiten Reihenschnittstelle 25 beeinflusst werden. Ferner können wahlweise und individuell elektrische Verbindungen zwischen der Koppelleitung 32 und den jeweils zugeordneten Signalleitungen 17 bis 20 herstellt bzw. unterbrochen werden. Dabei werden die Signalleitungen 17 bis 20 in gleicher Weise wie die Versorgungsleitungen 7 bis 14 an der zweiten Reihenschnittstelle 25 des Eingangsmoduls 3 bereitgestellt.

Die Versorgungsleitungen 7 bis 14 des Eingangsmoduls 3 sind jeweils paarweise zu betrachten und dienen zur Versorgung von nachgelagert längs der Aufreihungsachse 2 angeordneten, nicht näher dargestellten Gruppen von Reihenmodulen. Beispielhaft ist vorgesehen, dass jeweils eine Versorgungsleitung 7, 9, 11, 13 eines jeweiligen Versorgungsleitungspaars als Masseleitung dient, während die andere Versorgungsleitung 8, 10, 12 und 14 des Versorgungsleitungspaars potentialführend ist. Demgegenüber sind die Signalleitungen 17 bis 20 im Eingangsmodul 3 für eine individuelle Versorgung einzelner, nicht näher dargestellter Verbraucher vorgesehen.

Bei dem in der Figur 1 rein exemplarisch dem Eingangsmodul 3 zugeordneten Reihenmodul 4 ist beispielhaft vorgesehen, dass neben der Buskommunikationsleitung 11 auch sämtliche der Signalleitungen 17, 18, 19, 20 unverändert zwischen der ersten Busschnittstelle 22 beziehungsweise ersten Reihenschnittstelle 24 und der zweiten Busschnittstelle 23 beziehungsweise zweiten Reihenschnittstelle 25 durch das Reihenmodul 4 geführt sind. Gleiches gilt auch für die Versorgungsleitungen 7, 8, 9 und 10. Demgegenüber ist im Hinblick auf die Versorgungsleitungen 11 und 12 rein exemplarisch vorgesehen, dass diese ausgehend von der ersten Reihenschnittstelle 24 innerhalb des Reihenmoduls 4 zu einer Verbraucherschnittstelle 50 geführt sind und dort Anschlusskontakte 51, 52 ausbilden, die für eine Versorgung des beispielhaft als Proportionalventil ausgebildeten elektrischen Verbrauchers 5 genutzt werden können.

Die beiden Versorgungsleitungen 13 und 14 sind im Reihenmodul 4 als Z-Verkettung angeordnet, sie treten an der zweiten Reihenschnittstelle 25 an denjenigen Anschlussstellen aus, an denen an der ersten Reihenschnittstelle 24 des Reihenmoduls 4 die Versorgungsleitungen 11 und 12 angeschlossen sind und werden somit für ein nachfolgendes nicht dargestelltes Reihenmodul an der Stelle der Versorgungsleitungen 11 und 12 mit dessen erster Reihenschnittstelle verbunden.

Ferner ist an der Verbraucherschnittstelle 50 auch ein Anschlusskontakt 53 für eine Verbindung des Verbrauchers 5 mit der Buskommunikationsleitung 6 vorgesehen, sodass Buskommunikationssignale der Buskommunikationsleitung 6 an den elektrischen Verbraucher 5 bereitgestellt werden können. Dabei wird davon ausgegangen, dass der elektrische Verbraucher 5 eine eigene Intelligenz, insbesondere in Form eines nicht dargestellten Mikroprozessors oder Mikrocontrollers, umfasst. Diese Intelligenz ist dazu ausgebildet, eintreffende Buskommunikationssignale derart umzusetzen, dass ein Steuervorgang für das nicht näher dargestellte Proportionalventil des elektrischen Verbrauchers 5 durchgeführt werden kann.

Um eine sicherheitsgerichtete Betriebsweise für den Verbraucher 5 gewährleisten zu können, umfasst die Verbraucherschnittstelle 50 ferner einen Anschlusskontakt 54, der innerhalb de Reihenmoduls 4 mit einer der Versorgungsleitungen, exemplarisch mit der Versorgungsleitung 13, verbunden ist. Dabei wird davon ausgegangen, dass die elektrische Versorgung der jeweiligen Versorgungsleitungspaare mit Hilfe des Buskommunikationsbausteins 30 stattfindet und dass möglicherweise vorgesehen ist, ein oder mehrere nicht dargestellte Reihenmodule elektrisch mit dem Versorgungsleitungspaar zu versorgen, das die Versorgungsleitungen 13 und 14 umfasst. Beispielhaft kann vorgesehen sein, dass die von den Versorgungsleitungen 13 und 14 versorgten Reihenmodule eine Funktionsgruppe innerhalb eines Automatisierungssystems bilden, die zur Ansteuerung von Aktoren wie beispielsweise Pneumatikzylindern vorgesehen ist. Im Falle einer Störung des Automatisierungssystems kann vorgesehen sein, diese Gruppe von Reihenmodulen durch Unterbrechung der Versorgungsleitungen 13, 14 mittels des Buskommunikationsbausteins 30 stillzulegen. Wenn ferner jedoch sichergestellt sein soll, dass in diesem speziellen Fall der Verbraucher 5 trotz eines eventuell anderslautenden Buskommunikationssignals, das über die Buskommunikationsleitung 6 bereitgestellt wird, einen Schaltzustand beibehält, kann der Verbraucher 5 derart ausgebildet sein, dass er seinen Schaltzustand nur dann verändert, sofern an der Versorgungsleitung 13 ein vorgebbares elektrisches Potential anliegt. Sofern dies nicht der Fall sein sollte, ist der Verbraucher 5 derart ausgebildet, dass er seinen Schaltzustand nicht verändert.

Aus der Detaildarstellung des Verbrauchers 5 in der Figur 1 geht hervor, dass der Verbraucher 5 rein exemplarisch eine Last 45, bei der es sich beispielhaft um einen Magnetspulenantrieb handeln kann, einen Buskommunikationsbaustein 46, einen elektronischen Schalter 47 sowie eine Spannungsmesseinrichtung 48 umfasst. Dabei ist vorgesehen, dass die Last 45 und der elektronischen Schalter 47 in Reihe geschaltet sind und in einem Stromzweig angeordnet sind, der sich zwischen dem Anschlusskontakt 51 und dem Anschlusskontakt 52 erstreckt, wobei davon ausgegangen wird, dass am Anschlusskontakt 51 ein elektrisches Potenzial und am Anschlusskontakt 52 einem Massepotential anliegt. Ferner sind auch der Buskommunikationsbaustein 46 sowie die Spannungsmesseinrichtung 48 mit dem Anschlusskontakt 52 verbunden. Darüber hinaus ist der Buskommunikationsbaustein 46 elektrisch mit dem Anschlusskontakt 51 sowie mit dem Anschlusskontakt 53 verbunden, wobei am Anschlusskontakt 53 ein Buskommunikationssignal erfasst werden kann, das über die Buskommunikationsleitung 6 bereitgestellt wird. Die Spannungsmesseinrichtung 48 ist Ermittlung einer Potentialdifferenz zwischen dem Anschlusskontakt 54 und dem Anschlusskontakt 52 ausgebildet und stellt ein Messsignal über eine nicht bezeichnete Messleitung an den Buskommunikationsbaustein 46 zur Verfügung.

Grundsätzlich ist folgende Funktionsweise für den Verbraucher 5 vorgesehen: zunächst wird davon ausgegangen, dass im Eingangsmodul 3 die Schalter 38, 39, 40 und 41 geschlossen sind, so dass über die Verbindungsleitungspaare mit den Versorgungsleitungen 11, 12, 13, 14 jeweils elektrische Spannungen an das Reihenmodul 4 bereitgestellt werden. Ferner wird davon ausgegangen, dass über die Buskommunikationsleitung 6 Buskommunikationssignale bereitgestellt werden. Dementsprechend wird zwischen den Anschlusskontakten 51 und 52 eine erste elektrische Spannung bereitgestellt, während zwischen den Anschlusskontakten 51 und 53 eine zweite elektrische Spannung bereitgestellt wird, die im vorliegenden Fall jedoch betragsmäßig identisch mit der ersten elektrischen Spannung ist. Der Buskommunikationsbaustein 46 erhält über die Buskommunikationsleitung 6 und den Anschlusskontakt 53 jeweils Buskommunikationssignale, anhand derer ein frei wählbares öffnen oder Schließen des elektronischen Schalters 47 mittels eines Steuersignals vorgenommen werden kann, das vom Buskommunikationsbaustein 40 an den elektronischen Schalter 47 über die Steuerleitung 49 bereitgestellt wird. Dabei kann der Buskommunikationsbaustein 46 derart ausgebildet sein, dass die Bereitstellung des Steuersignals von einem Signal der Spannungsmesseinrichtung 48 abhängt. Exemplarisch ist vorgesehen, dass der Buskommunikationsbaustein 46 nur dann ein Steuersignal zum Öffnen des elektronischen Schalters 47 über die Steuerleitung 49 bereitstellt, wenn der Buskommunikationsbaustein 46 zum einen ein entsprechendes Buskommunikationssignal über die Buskommunikationsleitung 6 empfängt und zum anderen zeitgleich ein Signal von der Spannungsmesseinrichtung 48 bereitgestellt wird, aus dem der Buskommunikationsbaustein 46 ableiten kann, dass an dem durch die Versorgungsleitungen 13 und 14 gebildeten Verbindungsleitungspaar eine elektrische Spannung anliegt. Liegt hingegen an dem durch die Versorgungsleitungen 13 und 14 gebildeten Verbindungsleitungspaar keine elektrische Spannung an, so ist der Buskommunikationsbaustein 46 derart ausgebildet, dass er trotz eines entsprechenden Buskommunikationssignals kein Steuersignal über die Steuerleitung 49 an den elektronischen Schalter 47 bereitstellt, durch das eine Abschaltung des elektronischen Schalters 47 erfolgt. Dieses Verhalten des Buskommunikationsbausteins 46 folgt dem Ansatz, dass eine Veränderung des Schaltzustands der Last 45 nur dann vorgenommen werden soll, wenn gleichzeitig eine elektrische Versorgung eines nicht dargestellten, nachgelagert angeordneten Reihenmoduls über das Verbindungsleitungspaar mit den Versorgungsleitungen 13 und 14 gewährleistet ist. Ist hingegen eine solche elektrische Versorgung aufgrund einer entsprechenden Betätigung der Schalter 39 und 40 nicht vorgesehen, dass davon ausgegangen, dass zu diesem Zeitpunkt auch keine Änderung des Schaltzustands für die Last 45 erfolgen darf, so dass der Buskommunikationsbaustein 46 aufgrund des entsprechenden Signals der Spannungsmesseinrichtung 48 gewissermaßen verriegelt wird.

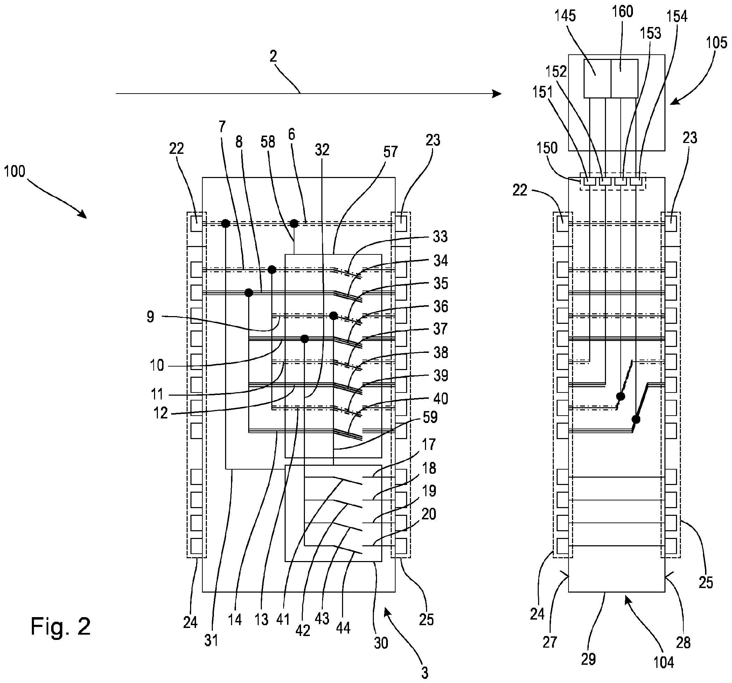

Bei dem in der Figur 2 dargestellten Reihenmodul 104 wird die vorstehend beschriebene Funktionsweise des Reihenmoduls 4 und des zugeordneten Verbrauchers 5 ohne einen Zugriff auf die Buskommunikationssignale verwirklicht, der so gehörige Verbraucher 105 umfasst zum einen eine Last 145, die rein exemplarisch unmittelbar mit den beiden Anschlusskontakten 151 und 152 und damit mit den zugehörigen Versorgungsleitungen 11 und 12 gekoppelt ist, wobei über die Versorgungsleitungen 11 und 12 und die zugehörigen Schalter 37 und 38 einen Einfluss auf die Funktionsstellung der Last 145 genommen wird. Der Last 145 ist ein Verriegelungsmittel 160 zugeordnet, das elektrisch über die Anschlusskontakte 153 und 154 versorgt werden kann, die ihrerseits mit dem Verbindungsleitungspaar aus den Versorgungsleitungen 13 und 14 verbunden sind. Rein exemplarisch ist vorgesehen, dass das Verriegelungsmittel 160 immer dann eine Veränderung eines Schaltzustands der Last 145 verhindert, wenn zwischen den beiden Anschlusskontakten 153 und 154 keine elektrische Spannung anliegt. In diesem Fall muss davon ausgegangen werden, dass ein über die Versorgungsleitungen 13 und 14 versorgtes, nicht dargestelltes Reihenmodul sicherheitsgerichtet abgeschaltet wurde und daher keine Veränderung des Schaltzustands der Last erfolgen soll.

## Patentansprüche

1. Reihenmodul für eine modular ausgebildete Steuerungsanordnung (1), mit einem Modulgehäuse (29), an dem eine erste Reihenschnittstelle (24) und eine erste Busschnittstelle (22) sowie eine zweite Reihenschnittstelle (25) und eine zweite Busschnittstelle (23) ausgebildet sind, wobei zwischen den beiden Busschnittstellen (22, 23) eine Buskommunikationsleitung (6) und zwischen den beiden Reihenschnittstellen (24, 25) wenigstens drei Versorgungsleitungen (7, 8, 9, 10, 11, 12, 13, 14, 17, 18, 19, 20) ausgebildet sind und wobei zwei der Versorgungsleitungen (7 bis 14, 17 bis 20) jeweils ein Anschlusskontakt (51, 52, 53, 54; 151, 152, 153, 154) zugeordnet ist, um eine Verbraucherschnittstelle (50; 150) zu bilden, die zum Anschluss eines elektrischen Verbrauchers (5; 105) ausgebildet ist, wobei der dritten Versorgungsleitung (7 bis 14, 17 bis 20) und/oder der Buskommunikationsleitung (6) jeweils ein mit der Verbraucherschnittstelle (50; 150) gekoppelter Anschlusskontakt (53, 54; 153, 154) zugeordnet ist.

2. Reihenmodul nach Anspruch 1, **dadurch gekennzeichnet, dass** wenigstens eine Versorgungsleitung (7 bis 14, 17 bis 20) zwischen den beiden Reihenschnittstellen (24, 25) Z-verkettet angeordnet ist.

3. Reihenmodul nach Anspruch 1 oder 2, **dadurch gekennzeichnet, dass** die Versorgungsleitungen (7 bis 14) jeweils als Versorgungsleitungspaare angeordnet sind, die jeweils eine erste Versorgungsleitung (7, 9, 11, 13) und eine zweite Versorgungsleitung (8, 10, 12, 14) umfassen und dass mindestens zwei der Versorgungsleitungspaare mit der Verbraucherschnittstelle (50; 150) gekoppelt sind.

4. Funktionsmodulanordnung mit einem Reihenmodul (4; 104) nach einem der vorhergehenden Ansprüche und mit einem elektrischen Verbraucher (5; 105), der eine Anschlussschnittstelle mit wenigstens drei Anschlusskontakten (51, 52, 53, 54; 151, 152, 153, 154) umfasst, die zur Kopplung mit der Verbraucherschnittstelle (50; 150) des Reihenmoduls (4; 104) ausgebildet ist, wobei der Verbraucher eine Lastschaltung (45; 145) umfasst, die mit einer ersten Paarung von Anschlusskontakten (51, 52; 151, 152) der Verbraucherschnittstelle (50; 150) verbunden ist und wobei der Verbraucher (5; 105) eine Steuerschaltung (46; 160) umfasst, die mit einer zweiten Paarung von Anschlusskontakten (52, 54; 153, 154) der Verbraucherschnittstelle (50; 150) verbunden ist und die für eine Beeinflussung wenigstens einer elektrischen Verbindung zwischen der ersten Paarung von Anschlusskontakten (51, 52; 151, 152) der Verbraucherschnittstelle (50; 150) und der Lastschaltung (45; 145) in Abhängigkeit von Signalpegeln an der zweiten Paarung von Anschlusskontakten (52, 54; 153, 154) ausgebildet ist.

5. Funktionsmodulanordnung nach Anspruch 4, **dadurch gekennzeichnet, dass** die Steuerschaltung (46; 160) als Sperrschaltung ausgebildet ist, die für eine Sperrung eines Zustands der Lastschaltung (45; 145) in Abhängigkeit von Signalpegeln an der zweiten Paarung von Anschlusskontakten (52, 54; 153, 154) ausgebildet ist.

6. Funktionsmodulanordnung nach Anspruch 4, **dadurch gekennzeichnet, dass** die Steuerschaltung einen Buskommunikationsbaustein (46) umfasst, der mit der Buskommunikationsleitung (6) gekoppelt ist und der für eine Umsetzung von Buskommunikationssignalen in Laststeuersignale zur Ansteuerung der Lastschaltung (45) ausgebildet ist, und dass die Steuerschaltung für eine Freigabe der Laststeuersignale in Abhängigkeit von Signalpegeln an der zweiten Paarung von Anschlusskontakten (52, 54) ausgebildet ist.

7. Funktionsmodulanordnung nach Anspruch 6, **dadurch gekennzeichnet, dass** die Steuerschaltung eine, insbesondere eine mittels eines Optokopplers mit dem Buskommunikationsbaustein (46) gekoppelte, Spannungsmesseinrichtung (48) umfasst.

8. Modular ausgebildete Steuerungsanordnung zur Ansteuerung mehrerer elektrischer Verbraucher (5; 105), mit einem Eingangsmodul (3), das eine Buskommunikationsschnittstelle (22) zur Verbindung mit einer übergeordneten Steuerung und eine Versorgungsschnittstelle (24) zur Verbindung mit einer elektrischen Quelle sowie eine Kombinationsschnittstelle mit einer Busschnittstelle (23) und einer Reihenschnittstelle (25) umfasst, wobei zwischen der Buskommunikationsschnittstelle (22) und der Busschnittstelle (23) eine Buskommunikationsleitung (6) ausgebildet ist und wobei zwischen der Versorgungsschnittstelle (24) und der Reihenschnittstelle (25) wenigstens zwei Versorgungsleitungen (7 bis 14, 17 bis 20) ausgebildet sind, wobei das Eingangsmodul (3) mit wenigstens einer Funktionsmodulanordnung (4, 5; 104, 105) nach einem der Ansprüche 4 bis 7 verbunden ist, deren Lastschaltung (5; 105) als elektrischer Verbraucher aus der Gruppe: Schaltventil, Proportionalventil, elektromechanischer Aktor, ausgebildet ist.

9. Modular ausgebildete Steuerungsanordnung nach Anspruch 8, **dadurch gekennzeichnet, dass** im Eingangsmodul (3) wenigstens einer, insbesondere jeder, Versorgungsleitung (7 bis 14, 17 bis 20) wenigstens eine Schalteinrichtung (33 bis 44) zur Unterbrechung der elektrischen Verbindung zwischen der Versorgungsschnittstelle (24) und der Reihenschnittstelle (25) zugeordnet ist.

## Claims

1. Series module for a modularly configured control arrangement (1; 100), comprising a first series interface (24), a first bus interface (22), a second series interface (25) and a second bus interface (23), wherein a bus communication line (6) is configured between the two bus interfaces (22, 23) and at least three supply lines (7, 8, 9, 10, 11, 12, 13, 14, 17, 18, 19, 20) are configured between the two series interfaces (24, 25) and wherein two of the supply lines (7 to 14, 17 to 20) are each assigned a connecting contact (51, 52, 53, 54, 55; 151, 152, 153, 154) in order to form a consumer interface (50; 150), which is configured to connect an electric consumer (5; 105), wherein the third supply line (7 to 14, 17 to 20) and/or the bus communication line (6) are each assigned to at least one connecting contact (53, 54, 55; 153, 154) coupled to the consumer interface (50; 150).

2. Series module according to claim 1, **characterised in that** at least one supply line (7 to 14, 17 to 20) is arranged between the two series interfaces (24, 25) in a Z-chained manner.

3. Series module according to claim 1 or 2, **characterised in that** the supply lines (7 to 14) are each arranged as supply line pairs, which each comprise a first supply line (7, 9, 11, 13) and a second supply line (8, 10, 12, 14) and **in that** at least two of the supply line pairs are coupled to the consumer interface (50; 150).

4. Functional module arrangement with a series module (4; 104) according to any of the preceding claims and with an electric consumer (5; 105), which comprises a connecting interface with at least three connecting contacts (51, 52, 53, 54, 55; 151, 152, 153, 154), which is configured to couple to the consumer interface (50; 150) of the series module (4; 104), wherein the consumer comprises a load circuit (45; 145), which is connected to a first pairing of connecting contacts (51, 52; 151, 152) of the consumer interface (50; 150) and wherein the consumer (5; 105) comprises a control circuit (46; 160), which is connected to a second pairing of connecting contacts (54, 55; 153, 154) of the consumer interface (50; 150) and which is configured to influence at least one electric connection between the first pairing of connecting contacts (51; 52; 151, 152) of the consumer interface (50; 150) and load circuit (45; 145) as a function of signal levels at the second pairing of connecting contacts (54, 55; 153, 154).

5. Functional module arrangement according to claim 4, **characterised in that** the control circuit (46; 160) is configured as a lockout circuit, which is configured to lock a status of the load circuit (45; 145) as a function of signal levels at the second pairing of connecting contacts (54, 55; 153, 154).

6. Functional module arrangement according to claim 4, **characterised in that** the control circuit comprises a bus communication unit (46), which is coupled to the bus communication line (6), and, which is configured to convert bus communication signals into load control signals to actuate the load circuit (45), and **in that** the control circuit is configured to enable the load control signals as a function of signal levels at the pairing of connecting contacts (54, 55).

7. Functional module arrangement according to claim 6, **characterised in that** the control circuit comprises a voltage measuring apparatus (48), in particular a voltage measuring apparatus coupled to the bus communication unit (46) by means of an optocoupler.

8. Modularly configured control arrangement to actuate a plurality of electric consumers (5; 105), with a connection module (3), which comprises a bus communication interface (22) to connect to a superordinate controller and a supply interface (24) to connect to an electric source and a combination interface with a bus interface (23) and a series interface (25), wherein a bus communication line (6) is configured between the bus communication interface (22) and the bus interface (23) and wherein at least two supply lines (7 to 14, 17 to 20) are configured between the supply interface (24) and the series interface (25), wherein the connection module (3) is connected to at least one functional module arrangement (4, 5; 104, 105) according to any one of claims 4 to 7, the load circuit (5; 105) of which is configured as an electric consumer from the group: switching valve, proportional valve, vacuum switching valve, electromechanical actuator.

9. Modularly configured control arrangement according to claim 8, **characterised in that** at least one switching apparatus (33 to 44) for interrupting the electric connection between the supply interface (24) and the series interface (25) is assigned to at least one, in particular each supply line (7 to 14, 17 to 20) in the connection module (3).

## Revendications

1. Module série pour un système de commande (1) conçu de manière modulaire, avec un boîtier de module (29), au niveau duquel une première interface série (24) et une première interface de bus (22) ainsi qu'une seconde interface série (25) et une seconde interface de bus (23) sont conçues, dans lequel entre les deux interfaces de bus (22, 23) est conçue une ligne de communication par bus (6) et entre les deux interfaces série (24, 25) sont conçues au moins trois lignes d'alimentation (7, 8, 9, 10, 11, 12, 13, 14, 17, 18, 19, 20) et dans lequel un contact de branchement (51, 52, 53, 54 ; 151, 152, 153, 154) est associé respectivement à deux des lignes d'alimentation (7 à 14, 17 à 20) pour former une interface de consommateur (50 ; 150) qui est conçue pour le branchement d'un consommateur électrique (5 ; 105), dans lequel un contact de branchement (53, 54 ; 153, 154) couplé à l'interface de consommateur (50 ; 150) est associé respectivement à la troisième ligne d'alimentation (7 à 14, 17 à 20) et/ou à la ligne de communication par bus (6).

2. Module série selon la revendication 1, **caractérisé en ce qu'**au moins une ligne d'alimentation (7 à 14, 17 à 20) est disposée sous forme de chaîne en Z entre les deux interfaces série (24, 25).

3. Module série selon la revendication 1 ou 2, **caractérisé en ce que** les lignes d'alimentation (7 à 14) sont respectivement disposées en tant que paires de lignes d'alimentation qui comportent chacune une première ligne d'alimentation (7, 9, 11, 13) et une seconde ligne d'alimentation (8, 10, 12, 14) et **en ce qu'**au moins deux des paires de lignes d'alimentation sont couplées à l'interface de consommateur (50 ; 150).

4. Système modulaire fonctionnel avec un module série (4 ; 104) selon l'une quelconque des revendications précédentes et avec un consommateur électrique (5 ; 105) qui comprend une interface de branchement avec au moins trois contacts de branchement (51, 52, 53, 54 ; 151, 152, 153, 154) qui est conçue pour le couplage à l'interface de consommateur (50 ; 150) du module série (4 ; 104), dans lequel le consommateur comprend un circuit de charge (45 ; 145) qui est relié à une première paire de contacts de branchement (51, 52; 151, 152) de l'interface de consommateur (50 ; 150) et dans lequel le consommateur (5 ; 105) comprend un circuit de commande (46 ; 160) qui est relié à une seconde paire de contacts de branchement (52, 54 ; 153, 154) de l'interface de consommateur (50 ; 150) et qui est conçu pour une influence d'au moins une liaison électrique entre la première paire de contacts de branchement (51, 52 ; 151, 152) de l'interface de consommateur (50 ; 150) et le circuit de charge (45 ; 145) en fonction de niveaux de signaux au niveau de la seconde paire de contacts de branchement (52, 54 ; 153, 154).

5. Système modulaire fonctionnel selon la revendication 4, **caractérisé en ce que** le circuit de commande (46 ; 160) est conçu en tant que circuit de blocage qui est conçu pour un blocage d'un état du circuit de charge (45 ; 145) en fonction de niveaux de signaux au niveau de la seconde paire de contacts de branchement (52, 54 ; 153, 154).

6. Système modulaire fonctionnel selon la revendication 4, **caractérisé en ce que** le circuit de commande comprend un composant de communication par bus (46) qui est couplé à la ligne de communication par bus (6) et qui est conçu pour une conversion de signaux de communication par bus en des signaux de commande de charge pour la commande du circuit de charge (45), et **en ce que** le circuit de commande est conçu pour une libération des signaux de commande de charge en fonction de niveaux de signaux au niveau de la seconde paire de contacts de branchement (52, 54).

7. Système modulaire fonctionnel selon la revendication 6, **caractérisé en ce que** le circuit de commande comprend un dispositif de mesure de tension (48) couplé, en particulier au moyen d'un optocoupleur, au composant de communication par bus (46).

8. Système de commande, conçu de manière modulaire, pour la commande de plusieurs consommateurs électriques (5 ; 105), avec un module d'entrée (3), qui comprend une interface de communication par bus (22) pour la liaison à une commande de niveau supérieur et une interface d'alimentation (24) pour la liaison à une source électrique ainsi qu'une interface de combinaison avec une interface de bus (23) et une interface série (25), dans lequel entre l'interface de communication par bus (22) et l'interface de bus (23) est conçue une ligne de communication par bus (6) et dans lequel entre l'interface d'alimentation (24) et l'interface série (25) sont conçues au moins deux lignes d'alimentation (7 à 14, 17 à 20), dans lequel le module d'entrée (3) est relié à au moins un système modulaire fonctionnel (4, 5 ; 104, 105) selon l'une quelconque des revendications 4 à 7, dont le circuit de charge (5 ; 105) est conçu en tant que consommateur électrique à partir du groupe : vanne de commande, vanne proportionnelle, actionneur électromécanique.

9. Système de commande, conçu de manière modulaire, selon la revendication 8, **caractérisé en ce que**, dans le module d'entrée (3) à au moins une, en particulier à chaque, ligne d'alimentation (7 à 14, 17 à 20) est associé au moins un dispositif de commutation (33 à 44) pour la coupure de la liaison électrique entre l'interface d'alimentation (24) et l'interface série (25).
